# EUROPÄISCHE PATENTSCHRIFT

(11) **EP 4 059 082 B1**
(45) Veröffentlichungstag und Bekanntmachung des Hinweises auf die Patenterteilung: **16.04.2025**
(21) Anmeldenummer: 20801234.4
(22) Anmeldetag: 04.11.2020
(51) Int. Cl.: H01M 10/613, H01M 10/615, H01M 10/653, H01M 10/6551, H01M 50/105, H01M 50/119, H01M 50/121, H01M 50/136, H01M 50/211, H01M 10/625

(54) **BATTERIEZELLE FÜR EINEN ELEKTRISCHEN ENERGIESPEICHER UND ELEKTRISCHER ENERGIESPEICHER**
BATTERY CELL FOR AN ELECTRICAL ENERGY STORE, AND ELECTRICAL ENERGY STORE
ÉLÉMENT DE BATTERIE POUR UN ACCUMULATEUR D'ÉNERGIE ÉLECTRIQUE, ET ACCUMULATEUR D'ÉNERGIE ÉLECTRIQUE

(30) Priorität: 11.11.2019 DE 102019007812
(43) Veröffentlichungstag der Anmeldung: 21.09.2022
(73) Patentinhaber: Mercedes-Benz Group AG, 70372 Stuttgart (DE)
(72) Erfinder: CÁDIZ BEDINI, Andrew, Paolo, 72764 Reutlingen (DE); KNEILE, Sebastian, 73230 Kirchheim/Nabern (DE)
(74) Vertreter: Novagraaf Group
(86) Internationale Anmeldenummer: PCT/EP2020/080872
(87) Internationale Veröffentlichungsnummer: WO 2021/094150

(56) Entgegenhaltungen:
- EP-A2- 1 944 824
- DE-A1- 102012 112 294
- DE-A1- 102016 225 175
- DE-B3- 102018 004 332

## Beschreibung

Die Erfindung betrifft eine Batteriezelle für einen elektrischen Energiespeicher, mit elektrochemisch aktiven Komponenten, welche jeweilige Elektroden der Batteriezelle umfassen, je nach Zelltyp gegebenenfalls mit einem zwischen den Elektroden angeordneten Separator und mit die jeweiligen Elektroden kontaktierenden Ableitern. Durch die Ableiter sind elektrische Anschlüsse der Batteriezelle bereitgestellt. Eine Hülleinrichtung der Batteriezelle bildet zumindest einen Teilbereich einer Außenseite der Batteriezelle. Des Weiteren betrifft die Erfindung einen elektrischen Energiespeicher mit einer Mehrzahl solcher Batteriezellen.

Die DE 10 2018 004 332 B3 beschreibt eine Akkuzelle für eine Traktionsbatterie eines Fahrzeugs. Die Akkuzelle weist eine an einer Außenhülle und an den Elektroden ausgebildete Oberflächenvergrößerung auf, die von einer Vielzahl einzelner, jeweils wärmeleitend mit der Außenhülle und mit den Elektroden verbundener Wärmeübertragungselemente gebildet wird.

Die WO 2015/065975 A1 beschreibt eine als Pouchzelle ausgebildete Lithium-Ionen-Batteriezelle. Die Pouchzelle weist eine Hülle aus einem elektrisch nicht-leitfähigen, polymerischen Material auf. Ein negativer elektrischer Ableiter und ein positiver elektrischer Ableiter der Pouchzelle sind mit jeweiligen Elektroden in Form einer Anode und einer Kathode gekoppelt, welche innerhalb der elektrisch isolierenden Hülle angeordnet sind. Der negative elektrische Ableiter und der positive elektrische Ableiter sind aus der Hülle herausgeführt. Die gesamte Pouchzelle ist wiederum in einer thermischen Hülle angeordnet, welche aus einer Kohlenstoff-basierten Thermofolie gebildet ist. Laschen der thermischen Hülle kontaktieren jeweilige Wärmemanagementeinrichtungen, welche dazu ausgebildet sind, von der Pouchzelle freigesetzte Wärme aufzunehmen und abzuführen.

Sowohl das Bereitstellen einer solchen thermischen Hülle als auch das Anordnen der Pouchzelle in der thermischen Hülle sind mit einem vergleichsweise großen Aufwand verbunden. Dies ist nachteilig.

Des Weiteren ist es möglich, Batteriezellen wie beispielsweise Lithium-Ionen-Zellen mittels Kühlflüssigkeiten zu kühlen oder über Kühlplatten, welche an Außenseiten der Batteriezellen anliegen. Gegenüber einer Kühlung von Lithium-Ionen-Zellen mittels Flüssigkeiten oder über Kühlplatten ist ein Kühlungssystem auf Basis einer Luftkühlung zwar kostengünstiger aber weniger leistungsfähig. Der Hauptgrund hierfür ist, dass Luft im Vergleich zu gängigen Kühlflüssigkeiten wie etwa Kühlwasser eine niedrigere Wärmekapazität aufweist. Daher ist es über eine Luftkühlung schwieriger, die im Betrieb einer Lithium-Ionen-Zelle erzeugte Wärme abzuführen, etwa wenn die Batteriezelle geladen wird, insbesondere schnell geladen wird, oder wenn die Batteriezelle eine sehr hohe Leistung abgibt und hierbei entladen wird.

Bei einem Luftkühlungssystem kann vorgesehen sein, dass Luft durch Zwischenräume in Form von Kanälen oder Spalten geleitet beziehungsweise umgewälzt wird, welche zwischen einzelnen Batteriezellen beziehungsweise zu Zellpacks zusammengefassten Batteriezellen ausgebildet sind. Als Kühlmittel verwendet Luft kann am Einlass eines solchen Luftkühlungssystems Raumtemperatur beziehungsweise Umgebungstemperatur aufweisen. Des Weiteren ist es möglich, einen elektrischen Energiespeicher wie etwa eine Batterie mit einer Mehrzahl von Batteriezellen zum Zwecke des Kühlens mit vorgekühlter Luft zu beaufschlagen. Alternativ zu einem Luftkühlsystem kann auch ein Kühlsystem mit flüssigem Kühlfluid verwendet werden.

Zum Heizen von Batteriezellen eines elektrischen Energiespeichers kann vorgesehen sein, dass zwischen den Batteriezellen oder Zellpacks insbesondere elektrisch betriebene Heizplatten oder Heizmatten angeordnet sind. Des Weiteren lässt sich auch mittels eines warmen Temperierfluids ein Erhöhen einer Temperatur der Batteriezellen eines elektrischen Energiespeichers auf eine gewünschte Betriebstemperatur, also ein Heizen von Batteriezellen erreichen.

Insbesondere beim Vorsehen eines Luftkühlungssystems erweist es sich jedoch wie erwähnt als vergleichsweise schwierig, während des Ladens oder Entladens in ausreichendem Ausmaß Wärme von einer Batteriezelle abzuführen.

Aufgabe der vorliegenden Erfindung ist es daher, eine Batteriezelle der eingangs genannten Art zu schaffen, welche besonders einfach zu kühlen ist und einen elektrischen Energiespeicher mit einer Mehrzahl solcher Batteriezelle anzugeben.

Diese Aufgabe wird durch eine Batteriezelle mit den Merkmalen des Patentanspruchs 1 und durch einen elektrischen Energiespeicher mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

Die erfindungsgemäße Batteriezelle für einen elektrischen Energiespeicher weist elektrochemisch aktive Komponenten auf, welche jeweilige Elektroden der Batteriezelle umfassen. Zwischen den Elektroden ist ein Separator der Batteriezelle angeordnet. Des Weiteren weist die Batteriezelle Ableiter auf, welche die jeweiligen Elektroden kontaktieren, und durch welche elektrische Anschlüsse der Batteriezelle bereitgestellt sind. Eine Hülleinrichtung der Batteriezelle bildet zumindest einen Teilbereich einer Außenseite der Batteriezelle. Die Hülleinrichtung weist eine Vielzahl von Strukturelementen auf, durch welche eine Oberfläche der Hülleinrichtung im Vergleich zu einer Hülleinrichtung ohne die Strukturelemente vergrößert ist. Mit anderen Worten sorgen die Strukturelemente dafür, dass die äußere Oberfläche der Hülleinrichtung größer ist als dies bei einer gleiche Abmessungen aufweisenden Hülleinrichtung der Fall wäre, welche nicht die Strukturelemente aufwiese.

Die Batteriezelle ist als Pouchzelle ausgebildet, wobei die Hülleinrichtung die aus dem elektrisch isolierenden Material gebildete Pouchfolie umfasst, welche die elektrochemisch aktiven Komponenten der Batteriezelle umschließt. Auf diese Weise kann der ohnehin zum Bereitstellen der Pouchzelle vorzusehenden, als Schutzhülle dienenden Pouchfolie eine weitere Funktionalität verliehen werden, indem durch die Pouchfolie die Hülleinrichtung bereitgestellt ist, welche die Strukturelemente aufweist.

Ein Abschnitt wenigstens eines der Strukturelemente tritt durch die Pouchfolie der Batteriezelle hindurch, welche die elektrochemisch aktiven Komponenten der Batteriezelle umschließt. Über den in das Innere der Batteriezelle hineinragenden Abschnitt kann besonders gut Wärme aus dem Inneren der Batteriezelle nach außen abgeführt werden oder in das Innere der Batteriezelle eingebracht werden.

Der durch die Pouchfolie hindurchtretende Abschnitt des wenigstens einen Strukturelements kontaktiert wenigstens einen der Ableiter der Batteriezelle thermisch, wobei eine elektrische Isolation vorhanden ist. Da die Ableiter von als Lithium-Ionen-Zellen ausgebildeten Batteriezellen üblicherweise aus Aluminium für die positive Elektrode und aus Kupfer für die negative Elektrode ausgebildet sind, führt ein thermisches Kontaktieren derartiger, gut Wärme leitender Ableiter mit den Abschnitten der Strukturelemente zu einer besonders guten Wärmeleitung von der Batteriezelle in die Umgebung oder aus der Umgebung in die Batteriezelle.

Aufgrund dieser durch die Hülleinrichtung bereitgestellten Oberflächenvergrößerung der Batteriezelle ist die Batteriezelle besonders einfach zu kühlen oder zu heizen. Dies gilt beispielsweise bei einer Beaufschlagung der Batteriezelle mit einem flüssigen Kühlmedium, jedoch insbesondere auch dann, wenn als Kühlmedium oder allgemein als Temperierfluid Luft zum Einsatz kommt. Denn die Luft, welche die Strukturelemente der Hülleinrichtung umströmt, kann besonders gut über diese zahlreichen Strukturelemente Wärme von der Batteriezelle abführen. Es ist also eine besonders effektive Wärmeableitung von der Batteriezelle ermöglicht. Dadurch kann ein sehr effizientes Kühlsystem bereitgestellt werden. Dies hat wiederum positive Auswirkungen auf die Performance beziehungsweise Leistungsfähigkeit der Batteriezelle und auf die Lebensdauer der Batteriezelle, bei welcher es sich insbesondere um eine Lithium-Ionen-Zelle handeln kann.

Des Weiteren lässt sich die Batteriezelle auch sehr einfach und rasch beheizen, etwa wenn dies bei kalten Umgebungstemperaturen erforderlich ist, um die Batteriezelle rasch auf eine vorbestimmte Betriebstemperatur zu bringen. Des Weiteren kann ein solches Vorheizen erforderlich sein, wenn die Batteriezelle geladen, insbesondere schnell geladen werden soll. Aufgrund der durch die Strukturelemente bereitgestellten, sehr großen äußeren Oberfläche der Batteriezelle lässt sich also auch eine sehr effektive Beheizung der Batteriezelle durch Beaufschlagen mit einem heißen oder warmen Temperierfluid, insbesondere mit Heißluft oder Kühlfüssigkeit, erreichen.

Die von den elektrischen Anschlüssen der Batteriezelle verschiedenen Strukturelemente führen somit zu einer Vergrößerung der effektiven Oberfläche der Batteriezelle beziehungsweise eines eine Mehrzahl von zusammengepackten Batteriezellen umfassenden Zellpacks oder Zellpakets. Des Weiteren ist eine verbesserte thermische Kopplung mit einem umgewälzten Temperierfluid, insbesondere mit umgewälzter Luft, für eine Heizung oder Kühlung erreichbar.

Es ist also sowohl eine verbesserte Kühlung der Batteriezelle als auch eine verbesserte Beheizung der Batteriezelle möglich, und dies bei gleichbleibender Kühlleistung beziehungsweise Heizleistung eines zur Verfügung stehenden Temperiersystems oder Thermomanagementsystems.

Des Weiteren lässt sich die Batteriezelle im Vergleich zu einer Batteriezelle, welche eine Hülleinrichtung ohne die Strukturelemente aufweist, mit allenfalls einem weiteren Fertigungsschritt oder gar gleich vielen Fertigungsschritten bereitstellen. Dies macht die Herstellung der Batteriezelle besonders aufwandsarm.

Darüber hinaus können zum Bereitstellen der Strukturelemente kostengünstige Materialien zum Einsatz kommen, sodass die Batteriezelle mit der verbesserten Temperierbarkeit besonders kostengünstig bereitgestellt werden kann.

Vorzugsweise umfasst die Hülleinrichtung einen aus einem flexiblen und/oder elastischen Material gebildeten Grundkörper und die Strukturelemente, wobei die Strukturelemente bereichsweise über den Grundkörper überstehen. Aufgrund der Flexibilität und/oder Elastizität des Grundkörpers kann die Hülleinrichtung bei einer Veränderung eines Volumens eines von der Hülleinrichtung umschlossenen Bereichs der Batteriezelle einer solchen Volumenänderung nachgeben. Die Eigenschaften des als Trägermaterial für die Strukturelemente dienenden Grundkörpers können somit insbesondere intelligent mit einer sich ändernden Temperatur der Batteriezelle variieren. Beispielsweise kann bei einer Volumenvergrößerung der Batteriezelle, wie sie in Folge eines Ladens der Batteriezelle auftreten kann, die beim Laden freigesetzte Wärme sehr gut über die Strukturelemente abgegeben werden, welche bereichsweise über den Grundkörper überstehen.

Des Weiteren sorgt das Überstehen von Bereichen der Strukturelemente über den Grundkörper dafür, dass in ein die Strukturelemente überströmendes Temperierfluid, insbesondere in die Strukturelemente überströmende Luft oder Kühlflüssigkeit, Turbulenzen eingebracht werden. Eine turbulente Strömung des Temperierfluids, insbesondere der Luft, führt zu einem besonders effizienten konvektiven Abtransport von Wärme von der Batteriezelle, wenn es gilt, die Batteriezelle zu kühlen. Des Weiteren kann durch ein eine turbulente Strömung aufweisendes Temperierfluid, auch ein sehr effizientes Beheizen der Batteriezelle bewirkt werden.

Vorzugsweise sind die Strukturelemente aus einem Material gebildet, welches eine größere Wärmeleitfähigkeit aufweist als das Material des Grundkörpers. Auf diese Weise lässt sich über die Strukturelemente besonders gut Wärme aus der Batteriezelle abführen beziehungsweise in die Batteriezelle einbringen.

Insbesondere können die Strukturelemente aus wenigstens einem Metall, worunter auch eine metallische Legierung zu verstehen ist, gebildet sein. Besonders kostengünstig lassen sich die Strukturelemente bereitstellen, wenn diese aus Aluminium oder aus einer Aluminiumlegierung gebildet sind. Die Verwendung von Kupfer ist zwar weniger kostengünstig, jedoch weist Kupfer eine sehr hohe Wärmeleitfähigkeit auf. Daher ist auch Kupfer beziehungsweise eine Kupfer enthaltende Legierung zum Bereitstellen der Strukturelemente geeignet.

Die Strukturelemente können insbesondere als Härchen und/oder Flocken und/oder Lamellen ausgebildet sein. Hierbei können eine Dicke der Strukturelemente im Bereich von Mikrometern bis Millimetern und eine Länge der Strukturelemente im Bereich von Millimetern bis Zentimetern liegen. Derartige, etwa nach Art von Kühlfasern oder Kühlrippen ausgebildete Strukturelemente direkt an der Außenseite der Batteriezelle sorgen für eine besonders große von dem Temperierfluid überströmbare Oberfläche der Batteriezelle.

Bei Verwendung wenigstens eines Metalls, worunter immer auch eine metallische Legierung verstanden werden soll, zum Bereitstellen der Strukturelemente und eines Kunststoffmaterials zum Bereitstellen eines Grundkörpers kann dementsprechend die Hülleinrichtung aus einem Kompositmaterial gebildet sein, welche den Kunststoff und das wenigstens eine Metall umfasst. Insbesondere kann das wenigstens eine Metall in Form einer Folie auf einen folienartigen Grundkörper aufgebracht sein. Aus der metallischen Folie können hierbei die Strukturelemente gebildet sein, welche für das Bereitstellen der besonders großen Oberfläche der Hülleinrichtung sorgen. Somit ist auf kostengünstige Weise eine funktionelle Folie als Hülleinrichtung der Batteriezelle bereitgestellt.

Das wenigstens eine Metall, welches die Strukturelemente bildet und vorzugsweise die größere Wärmeleitfähigkeit aufweist als das Material des Grundkörpers, kann insbesondere Eigenschaften haben, welche in Abhängigkeit von der Temperatur variieren. Beispielsweise kann das Metall einen Memory-Effekt haben, aufgrund dessen eine von dem metallischen Strukturelement eingenommene Form in Abhängigkeit von der Temperatur variiert. Derartige, intelligente Kompositmaterialien sind zum Bereitstellen der Hülleinrichtung vorteilhaft.

Vorzugsweise liegt ein Abschnitt wenigstens eines der Strukturelemente an der aus einem elektrisch isolierenden Material gebildeten Pouchfolie der Batteriezelle an, welche die elektrochemisch aktiven Komponenten der Batteriezelle umschließt. Auf diese Weise kann aus dem Inneren der Batteriezelle über den an der Pouchfolie anliegenden Abschnitt besonders gut Wärme abgeführt werden oder in das Innere der Batteriezelle eingebracht werden.

Vorzugsweise ist eine Größe des Abschnitts und/oder eine Länge eines über den Grundkörper überstehenden Endbereichs wenigstens eines der Strukturelemente in Abhängigkeit von einem Volumen eines von der Pouchfolie umschlossenen Bereichs der Batteriezelle veränderbar. Insbesondere kann ein größerer Abschnitt an der Pouchfolie anliegen, wenn das Volumen des von der Pouchfolie umschlossenen Bereichs der Batteriezelle sich vergrößert. Des Weiteren kann ein Endbereich größerer Länge über den Grundkörper überstehen, wenn sich das Volumen des von der Pouchfolie umschlossenen Bereichs der Batteriezelle vergrößert.

Auf diese Weise kann dem Umstand Rechnung getragen werden, dass sich eine Dicke von als Lithium-Ionen-Zellen ausgebildeten Batteriezellen in Abhängigkeit von einer Alterung der Batteriezelle und/oder in Abhängigkeit von einem Ladezustand der Batteriezelle ändern kann. Beispielsweise kann also aufgrund einer Zellalterung eine Dicke der Batteriezelle zunehmen, wobei sich das Volumen des von der Pouchfolie umschlossenen Bereichs der Batteriezelle vergrößert. In einem elektrischen Energiespeicher, welcher benachbart angeordnete Batteriezellen aufweist, kann dann der Fall auftreten, dass als Kanäle für ein Temperierfluid dienende Zwischenräume zwischen den benachbarten Batteriezellen schmaler werden. Dennoch kann auch in diesem Fall über die Strukturelemente gut Wärme von den Batteriezellen abgeführt beziehungsweise in die Batteriezellen eingebracht werden. Dies kann begünstigt werden, wenn sich mit wachsender Dicke der Batteriezelle die thermische Kontaktfläche zu der Pouchfolie vergrößert, welche die elektrochemisch aktiven Komponenten der Batteriezelle umschließt. Denn aufgrund der sich dynamisch verändernden, und beispielsweise aufgrund des Dickenwachstums größer werdenden thermischen Kontaktfläche kann die Wärme verbessert von der Batteriezelle abgeleitet beziehungsweise in die Batteriezelle eingebracht werden. Es ist somit erreichbar, dass eine über die Hülleinrichtung erreichbare Wärmeabfuhr ansteigt, wenn im Laufe der Alterung der Batteriezelle die Batteriezelle dicker wird.

Des Weiteren ist es zum Ableiten von Wärme von der Batteriezelle und zum Einbringen von Wärme in die Batteriezelle förderlich, wenn die Länge des über den Grundkörper überstehenden Endbereichs wenigstens eines der Strukturelemente bei einer Zunahme des Volumens des von der Pouchfolie umschlossenen Bereichs der Batteriezelle zunimmt. Denn dann kann ein besonders langer Endbereich des wenigstens einen Strukturelements von dem Temperierfluid umströmt werden.

Insbesondere können in die eine metallische Lage umfassende Hülleinrichtung der Pouchzelle die Strukturelemente eingebracht werden, beispielsweise durch Bearbeitung der Metallfolie mit einem Laser oder durch Verschweißungsverfahren oder dergleichen.

Vorteilhaft ist hierbei, dass die Hülleinrichtung nicht als zusätzliche Hülle um die Batteriezelle ausgebildet zu werden braucht. Vielmehr kann beim Fertigen der Pouchzelle und dem Einbringen oder Anbringen der ohnehin vorzusehenden Schutzhülle, welche die elektrochemisch aktiven Komponenten der Pouchzelle umgibt, zugleich die Hülleinrichtung bereitgestellt werden, welche die Vielzahl von Strukturelementen aufweist. Das Einbringen der Hülleinrichtung in die Batteriezelle kann also insbesondere im Rahmen der Herstellung der Batteriezelle erfolgen. Dies macht die Fertigung der leicht zu temperierenden Batteriezelle besonders aufwandsarm.

Die Strukturelemente können eine elektrisch isolierende, stellenweise oder gänzliche Beschichtung aufweisen. Eine derartige, vorzugsweise sehr dünne Beschichtung verringert die wärmeleitenden Eigenschaften bei aus Metall gebildeten Strukturelementen allenfalls unwesentlich. Dennoch kann auf diese Weise verhindert werden, dass über die Strukturelemente eine elektrisch leitende Verbindung zwischen Komponenten der Batteriezelle oder zwischen Batteriezellen hergestellt wird, welche nach Möglichkeit vermieden werden sollte.

Der erfindungsgemäße elektrische Energiespeicher weist eine Mehrzahl von erfindungsgemäßen Batteriezellen auf. So lässt sich der beispielsweise als Hochvoltbatterie für ein Kraftfahrzeug ausgebildete elektrische Energiespeicher besonders einfach temperieren, insbesondere kühlen. Dies gilt insbesondere auch, wenn ein Temperierfluid für direkte Kühlung oder Heizung zum Einsatz kommt. Die Hochvoltbatterie kann eine Nennspannung von mehr als 60 Volt und insbesondere von mehreren 100 Volt bereitstellen.

Vorzugsweise ist zwischen zwei benachbarten Batteriezellen des elektrischen Energiespeichers ein von einem Temperierfluid durchströmbarer Zwischenraum ausgebildet, in welchen zumindest Bereiche der Strukturelemente hineinragen. Auf diese Weise kann beim Durchströmen des Zwischenraums besonders gut Wärme in die Batteriezellen des elektrischen Energiespeichers eingebracht oder Wärme von den Batteriezellen abgeführt werden.

Vorzugsweise kontaktiert wenigstens eines der Strukturelemente einer ersten Batteriezelle von zwei benachbarten Batteriezellen eine zweite Batteriezelle der beiden benachbarten Batteriezellen. Auf diese Weise wird der zur Verfügung stehende Zwischenraum von den Strukturelementen besonders gut ausgenutzt.

Zusätzlich oder alternativ kann vorgesehen sein, dass die in dem Zwischenraum angeordneten Bereiche der Strukturelemente benachbarter Batteriezellen die benachbarten Batteriezellen bei einer Verringerung einer Größe des Zwischenraums auf Abstand voneinander halten. Die Strukturelemente dienen somit nicht nur zur Oberflächenerweiterung der Batteriezellen sondern sie sorgen auch für eine Beabstandung der Batteriezellen voneinander und ebenso für eine Verpressung der Batteriezellen gegeneinander, wenn etwa aufgrund einer Vergrößerung der Dicke der Batteriezellen beim Laden und/oder aufgrund von Zelldickenwachstum im Laufe einer Alterung der Batteriezellen der Zwischenraum zwischen den benachbarten Batteriezellen kleiner wird.

Dadurch, dass die Strukturelemente die Batteriezellen auf Abstand voneinander halten, kann auch in derartigen Fällen eine gute Wärmeabfuhr von den Batteriezellen oder ein gutes Einbringen von Wärme in die Batteriezellen erreicht werden, indem das Temperierfluid durch den Zwischenraum zwischen den benachbarten Batteriezellen hindurchgeleitet wird.

Die für die erfindungsgemäße Batteriezelle beschriebenen Vorteile und bevorzugten Ausführungsformen gelten auch für den erfindungsgemäßen elektrischen Energiespeicher und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: in einer schematischen, stirnseitigen Ansicht eine Batteriezelle mit einer Hülleinrichtung in Form einer Oberflächenerweiterungsfolie, welche in Umfangsrichtung um einen Aktivbereich der Batteriezelle umläuft und hierbei den Aktivbereich in Umfangsrichtung vollständig umschließt;
- Fig. 2: eine Seitenansicht der Batteriezelle gemäß Fig. 1;
- Fig. 3: eine Draufsicht auf die Batteriezelle gemäß Fig. 1;
- Fig. 4: in einer schematischen, stirnseitigen Ansicht eine Variante der Batteriezelle, bei welcher die Hülleinrichtung den Aktivbereich lediglich teilweise bedeckt;
- Fig. 5: eine Seitenansicht der Batteriezelle gemäß Fig. 4,
- Fig. 6: eine Draufsicht auf die Batteriezelle gemäß Fig. 4;
- Fig. 7: in einer schematischen und teilweise geschnittenen Ansicht einen Ausschnitt der ungeladenen oder noch nicht gealterten Batteriezelle, wobei Strukturelemente der Oberflächenerweiterungsfolie schematisch gezeigt sind;
- Fig. 8: eine Ansicht gemäß Fig. 7, wobei die Batteriezelle sich im vollgeladenen Zustand befindet oder stark gealtert ist und sich nahe dem Ende ihrer Lebensdauer befindet;
- Fig. 9: einen Ausschnitt aus einem elektrischen Energiespeicher, welcher eine Mehrzahl der Batteriezellen umfasst, wobei die Strukturelemente der Oberflächenerweiterungsfolie in zwischen den Batteriezellen ausgebildete Zwischenräume hineinragen;
- Fig. 10: den Zustand des elektrischen Energiespeichers gemäß Fig. 9 bei Volladung oder nach einem alterungsbedingten Dickenwachstum der Batteriezellen;
- Fig. 11: eine Variante des elektrischen Energiespeichers gemäß Fig. 9, bei welcher im Gegensatz zu der Variante gemäß Fig. 9 zwei Batteriezellen zu einem Zellpack oder Zellpaket zusammengefasst sind; und
- Fig. 12: die Variante gemäß Fig. 11, wobei die Zwischenräume zwischen den Batteriezellen aufgrund eines Dickenwachstums der Batteriezellen verkleinert sind.

In den Fig. sind gleiche oder funktionsgleiche Elemente mit gleichen Bezugszeichen versehen.

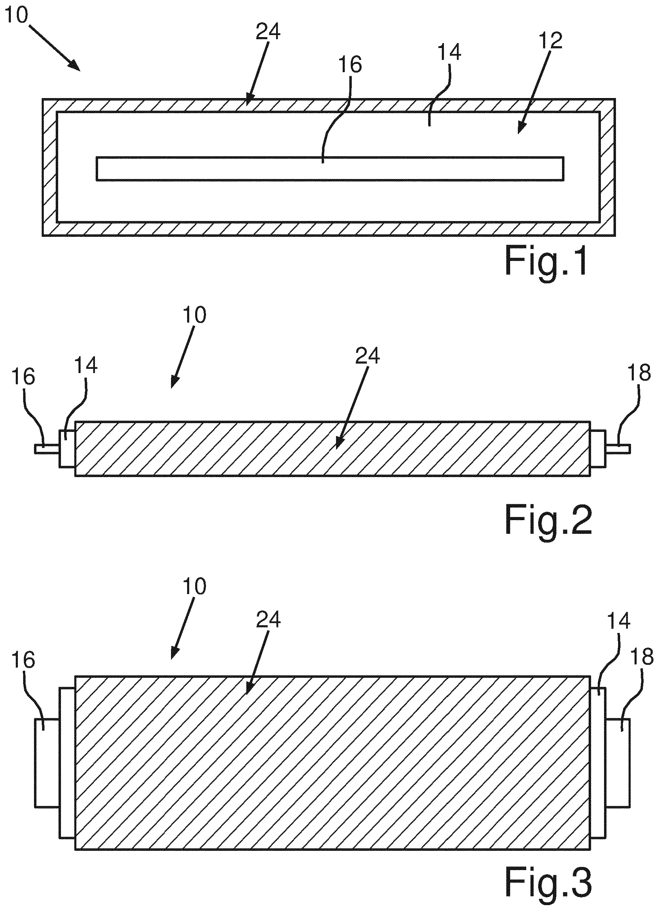

In Fig. 1 ist stark schematisiert eine Batteriezelle 10 gezeigt, welche insbesondere als sogenannte Pouchzelle ausgebildet sein kann. Ein Aktivbereich 12 der Batteriezelle 10, welche im Hinblick auf ihre elektrochemisch aktiven Komponenten insbesondere als Lithium-Ionen-Zelle ausgebildet sein kann, ist vorliegend von einer aus einem elektrisch isolierenden Material gebildeten Pouchfolie 14 umschlossen. Aus dieser nach Art einer Schutzhülle ausgebildeten Pouchfolie 14 treten elektrische Anschlüsse der Batteriezelle 10 in Form eines positiven Ableiters 16 oder Pluspols der Batteriezelle 10 und eines negativen Ableiters 18 oder Minuspols der Batteriezelle 10 hervor (vergleiche Fig. 2). Innerhalb des von der Pouchfolie 14 umschlossenen Aktivbereichs 12 befinden sich die elektrochemisch aktiven Komponenten der Batteriezelle 10, also jeweilige Elektroden in Form einer Kathode und einer Anode, wobei zwischen diesen Elektroden ein Separator angeordnet sein kann. Die jeweiligen Elektroden sind in vorliegend nicht näher gezeigter Art und Weise von Ableitern kontaktiert, durch welche die elektrischen Anschlüsse 16, 18 der Batteriezelle bereitgestellt sind. Des Weiteren ist in dem Aktivbereich 12 der Batteriezelle 10 ein flüssiger oder fester Elektrolyt vorhanden.

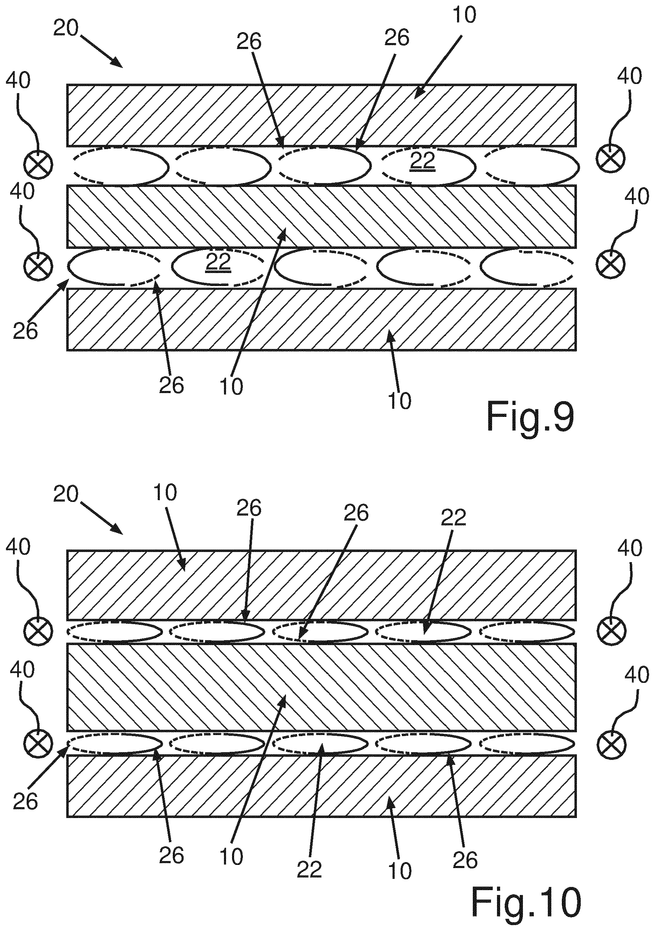

Derartige Batteriezellen 10 können in einem elektrischen Energiespeicher 20, welcher ausschnittsweise und schematisch in Fig. 9 gezeigt ist, voneinander beabstandet angeordnet sein. Dementsprechend sind zwischen den Batteriezellen 10 Zwischenräume 22 ausgebildet, durch welche zum Kühlen oder Heizen, also zum Temperieren der Batteriezellen 10 ein flüssiges oder gasförmiges Temperierfluid hindurchgeleitet werden kann. Insbesondere bei der Verwendung von Luft als dem Temperierfluid, also bei einem luftgekühlten beziehungsweise mit Luft temperierten elektrischen Energiespeicher 20, erweist es sich als schwierig, zum Kühlen der Batteriezellen 10 eine ausreichende Wärmeabfuhr über die Luft sicherzustellen und zum Heizen der Batteriezellen 10 mittels der Luft rasch Wärme in die Batteriezellen einzubringen.

Vorliegend lassen sich die Batteriezellen 10 jedoch auch bei Verwendung von Luft als Temperierfluid sehr einfach und effektiv kühlen und heizen. Dies liegt daran, dass die jeweilige Batteriezelle 10 eine Hülleinrichtung 24 (vergleiche Fig. 1) mit einer Vielzahl von Strukturelementen 26 aufweist. Die in Fig. 1 nicht explizit dargestellten Strukturelemente 26 können beispielsweise als Härchen, als Flocken, als Lamellen oder dergleichen ausgebildet sein.

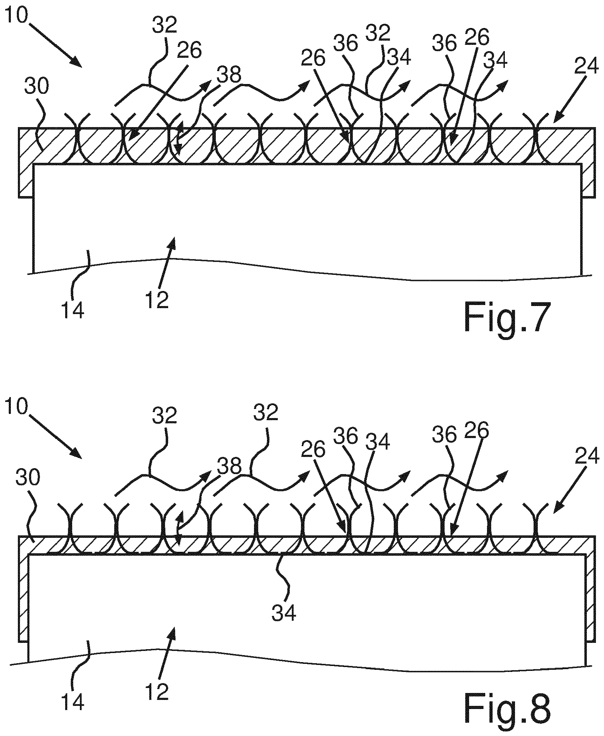

In der schematischen Darstellung eines Ausschnitts der Batteriezelle 10 in Fig. 7 sind die Strukturelemente 26 der Hülleinrichtung 24 als feine Härchen gezeigt, wobei lediglich einige der Strukturelemente 26 mit einem Bezugszeichen versehen sind. Durch das Vorsehen derartiger Strukturelemente 26 ist eine Oberfläche der Hülleinrichtung 24 deutlich größer als dies der Fall wäre, wenn die Hülleinrichtung 24 nicht die Strukturelemente 26 aufweisen würde. Dementsprechend dient die vorliegend nach Art einer Folie ausgebildete Hülleinrichtung 24 als Oberflächenerweiterungsfolie der Batteriezelle 10.

Aufgrund der stark vergrößerten äußeren Oberfläche der Batteriezelle 10 lässt sich über die Luft als Temperierfluid sehr einfach Wärme von den Batteriezellen 10 abführen oder beim Beheizen der Batteriezellen 10 Wärme in die Batteriezellen 10 einbringen. Dies gilt jedoch auch, wenn ein flüssiges Temperierfluid zum Temperieren der Batteriezelle 10 verwendet wird.

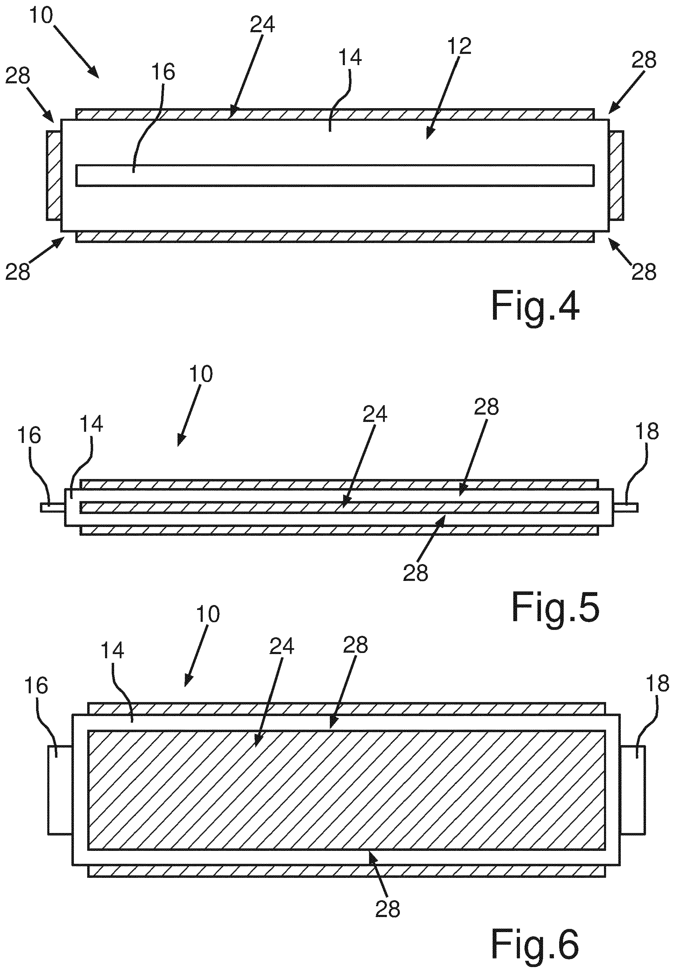

Besonders vorteilhaft ist die Einbringung der Strukturelemente 26 in diejenigen Seiten einer Zelle, die senkrecht zur Hauptfläche der Aktivlagen der Zelle sind, da die Wärme innerhalb der Aktivlage sehr gut in die Randbereiche transportiert wird. Insbesondere ist der Wärmetransport über verschiedene Aktivlagen hinweg geringer, so dass die Kühlwirkung an der Hauptfläche der Zellen einen geringeren Effekt hat. So ist eine Einbringung der Strukturelemente an oder in die Pouchfolie 14 der in den Figuren 4 und 5 dargestellten Bereiche besonders effektiv.

Aus Fig. 2 und Fig. 3 ist ersichtlich, dass die strukturierte beziehungsweise funktionelle Folie, durch welche die Hülleinrichtung 24 bereitgestellt ist, den Aktivbereich 12 der Batteriezelle 10 in Umfangsrichtung vollständig umhüllen kann, sodass Schmalseiten (vergleiche Fig. 2) und Breitseiten (vergleiche Fig. 3) der vorliegend flach und im Wesentlichen quaderförmig ausgebildeten Batteriezelle 10 nahezu vollständig von der Hülleinrichtung 24 bedeckt sind. Mit Ausnahme von freien Enden, in welchen die Anschlüsse 16, 18 aus dem von der elektrisch isolierenden Pouchfolie 14 umschlossenen Aktivbereich 12 heraustreten, ist somit bei der in Fig. 1 bis Fig. 3 gezeigten Variante der Batteriezelle 10 durch die Hülleinrichtung 24 eine Außenseite der Batteriezelle 10 gebildet.

Ein derartiges Ummanteln des Aktivbereichs 12 mit der texturierten beziehungsweise funktionellen Folie in Form der Hülleinrichtung 24 lässt sich fertigungstechnisch besonders einfach realisieren. Zudem lässt sich über die vergleichsweise große Fläche der Hülleinrichtung 24 besonders gut Wärme von der Batteriezelle 10 abführen oder in die Batteriezelle 10 einbringen.

Wie aus Fig. 4 bis Fig. 6 hervorgeht, kann bei der Batteriezelle 10 die Hülleinrichtung 24 jedoch auch nicht vollständig um den Aktivbereich 12 umlaufend ausgebildet sein.

Aus Fig. 4 bis Fig. 6 ist insbesondere ersichtlich, dass in Eckbereichen 28 der Batteriezelle 10 nicht durch die Hülleinrichtung 24, sondern durch die in den Eckbereichen 28 frei zugängliche Pouchfolie 14 eine Außenseite der Batteriezelle 10 gebildet sein kann. Dementsprechend sind lediglich an den Schmalseiten (vergleiche Fig. 5 und Fig. 6) sowie an einer Oberseite und an einer Unterseite (vergleiche Fig. 5 und Fig. 6) der Batteriezelle 10 Streifen angeordnet, durch welche die Hülleinrichtung 24 bereitgestellt ist. Hier bilden dann diese Streifen die Außenseite der Batteriezelle 10.

Bei der in Fig. 4 bis Fig. 6 gezeigten Variante, bei welcher die durch die Hülleinrichtung 24 gebildeten Streifen der Oberflächenerweiterungsfolie nur Teile des Aktivbereichs 12 bedecken, stehen größere Flächen zur Verfügung, an welchen die Batteriezelle 10 mit einem (vorliegend nicht gezeigten) Rahmen des elektrischen Energiespeichers 20 gekoppelt werden kann, um den Abstand zwischen den Batteriezellen 10 einzustellen und somit für die Ausbildung der Zwischenräume 22 zwischen den Batteriezellen 10 zu sorgen (vergleiche Fig. 9).

Insbesondere aus Fig. 7 und Fig. 8 ist ersichtlich, dass die Folie, durch welche die Hülleinrichtung 24 gebildet ist, einfach und kostengünstig aus einem Kompositmaterial gebildet sein kann. Hierbei weist die Hülleinrichtung 24 einen beispielsweise aus Kunststoff gebildeten Grundkörper 30 auf, wobei in den Grundkörper 30 die Strukturelemente 26 eingebracht sind.

Die Strukturelemente 26 können gemäß der schematischen Darstellung in Fig. 7 beispielsweise als aus wenigstens einem Metall beziehungsweise einer metallischen Verbindung gebildete Härchen ausgebildet sein. Durch diese Härchen, welche eine größere Wärmeleitfähigkeit aufweisen als der Grundkörper 30, wird nicht nur die effektive Oberfläche der Batteriezelle 10 vergrößert. Es kann also nicht nur die etwa im Entladebetrieb der Batteriezellen 10 oder beim Laden der Batteriezellen 10 generierte Wärme gut in die umgewälzte Luft übertragen werden, welche in Fig. 7 durch Strömungspfeile 32 veranschaulicht ist. Vielmehr sorgen die Strukturelemente 26 vorzugsweise auch für ein turbulentes Strömen der Luft. Dies führt in analoger Weise wie beim Kühlen der Batteriezelle 10 beim Heizen der Batteriezelle 10 zu einem besonders effektiven Einbringen von Wärme in die Batteriezelle 10. Ein solches Beheizen der Batteriezelle 10 ist beispielsweise bei kaltem Wetter vorteilhaft oder wenn die Batteriezellen 10 für ein, insbesondere schnelles, Laden vorgeheizt werden sollen.

Bei Ausführung der Hülleinrichtung 24 aus dem Kompositmaterial ist es vorteilhaft, wenn das Trägermaterial in Form des Grundkörpers 30 aus einem flexiblen beziehungsweise schrumpfbaren Kunststoff besteht, während das hauptsächlich die Wärme leitende Material der Hülleinrichtung 24 in Form der Strukturelemente 26 aus wenigstens einem Metall beziehungsweise einer Metallverbindung gebildet ist.

Des Weiteren kann ein jeweiliger Abschnitt 34 der Strukturelemente 26 an der aus dem elektrisch isolierenden Material gebildeten Pouchfolie 14 der Batteriezelle 10 anliegen. So kann über diesen Abschnitt 34 gut Wärme aus dem Aktivbereich 12 aufgenommen und anschließend in die Kühlluft oder die Kühlflüssigkeit abgegeben werden. Hierbei sorgen über den Grundkörper 30 überstehende freie Endbereiche 36 der Strukturelemente 26 für einen guten Kontakt zu dem Kühlfluid und vorzugsweise auch für das Bewirken der turbulenten Strömung des Kühlfluids. Eine Wärmeabgabe beziehungsweise Wärmeaufnahme der Batteriezelle 10 über die Hülleinrichtung 24 und insbesondere deren Strukturelemente 26 ist in Fig. 7 und in Fig. 8 durch einen Doppelpfeil 38 veranschaulicht.

Fig. 7 zeigt die Batteriezelle 10 ausschnittsweise am Beginn ihrer Lebensdauer, also die noch weitgehend nicht gealterte Batteriezelle 10. Aus Fig. 7 ist diesbezüglich ersichtlich, dass eine Größe des Abschnitts 34, welcher an der Pouchfolie 14 anliegt, noch vergleichsweise gering ist. Mit anderen Worten ist die Kontaktfläche der in den Grundkörper 30 eingebetteten Strukturelemente 26 oder Komponenten mit einer höheren thermischen Leitfähigkeit innerhalb der elastischen zweiten Außenhaut der Batteriezelle 10 begrenzt, welche durch die Hülleinrichtung 24 bereitgestellt ist.

In Fig. 8 ist demgegenüber der Zustand der Batteriezelle 10 gezeigt, wenn sich diese ihrem Lebensende nähert, also vergleichsweise stark gealtert ist. Hierbei ist ersichtlich, dass der Grundkörper 30 der Hülleinrichtung 24 gestreckt ist. Dies liegt daran, dass der von der Pouchfolie 14 umschlossene Aktivbereich 12 aufgrund der Alterung der Batteriezelle 10 in seiner Dicke zunimmt. Dies führt des Weiteren dazu, dass die Zwischenräume 22 zwischen den Batteriezellen 10 schmaler werden (vergleiche Fig. 10).

Vorzugsweise sind die Strukturelemente 26 derart in dem Grundkörper 30 angeordnet, dass bei einem derartigen Schmaler-Werden der Zwischenräume 22 die Kontaktfläche der Strukturelemente 26 zu der Pouchfolie 14 zunimmt. Dementsprechend nimmt die Größe des Abschnitts 34 zu, in welchem die Strukturelemente 26 an der Pouchfolie 14 anliegen. Des Weiteren ermöglicht die vergrößerte Kontaktfläche der Strukturelemente gleichzeitig eine gegenseitige Verpressung von gegenüberliegenden, also benachbart angeordneten Zellen.

Das Vergrößern der Kontaktfläche zwischen den Strukturelementen 26 und der Pouchfolie 14 und/oder das Überstehen des größeren Endbereichs 36 über den Grundkörper 30 kann insbesondere durch eine entsprechende Formgebung der Strukturelemente 26 und deren Einbettung in den Grundkörper 30 erreicht werden. Beispielsweise können die Strukturelemente 26 sich aneinander abstützen und so für das vorstehend beschriebene Verhalten sorgen.

Sowohl die dynamisch vergrößerte Kontaktfläche der Strukturelemente 26 mit der Pouchfolie 14 als auch die größere Länge der freiliegenden Endbereiche 36 sorgt für eine verbesserte Wärmeabfuhr von der Batteriezelle 10 beim Kühlen der Batteriezelle 10. Dementsprechend kann das Dünner-Werden der Kühlkanäle, also der Zwischenräume 22 (vergleiche Fig. 10), besonders weitgehend kompensiert werden. Es ist also auch bei schmalen Zwischenräumen 22 eine gute Kühlung der Batteriezellen 10 erreichbar. Des Weiteren kann auch beim Heizen, also beim Einbringen von Wärme in die Batteriezellen 10, mit zunehmendem Dickenwachstum der Batteriezellen 10 die Heizleistung heruntergeregelt werden.

In Fig. 9 ist ersichtlich, wie in dem elektrischen Energiespeicher 20 mehrere Batteriezellen 10 benachbart zueinander angeordnet sein können. Zwischen den benachbarten Batteriezellen 10 sind die jeweiligen Zwischenräume 22 ausgebildet, durch welche der Fluidstrom in Form der Kühlluft oder der Kühlflüssigkeit hindurchströmen kann. Der Fluidfluss durch die Zwischenräume 22 entlang der Breitseiten der Batteriezellen 10 ist in Fig. 9 durch entsprechende Symbole 40 veranschaulicht.

Aus Fig. 9 ist weiter ersichtlich, dass die Strukturelemente 26 der benachbarten Batteriezellen 10 einander kontaktieren. Die Metallstrukturen in Form der Strukturelemente 26 dienen also nicht nur der Vergrößerung beziehungsweise Erweiterung einer äußeren Oberfläche der jeweiligen Batteriezellen 10. Vielmehr kann durch die Strukturelemente 26 auch erreicht werden, dass die benachbarten Batteriezellen 10 auf Abstand voneinander gehalten werden. Die Strukturelemente 26 können des Weiteren elastisch ausgebildet sein und somit einem Verpressen der Batteriezellen 10 in dem elektrischen Energiespeicher 20 dienen. Dabei sind die Strukturelemente jeweils an einer Zelle, insbesondere stoffschlüssig mit der Pouchfolie angeordnet und ragen aus dieser heraus oder sind Teil der Pouchfolie. Diese Strukturelemente, die als Teil der Pouchfolie einer Zelle ausgebildet sind stützen die jeweilige Zelle gegenüber der dieser benachbarten Zelle mechanisch ab.

In Fig. 10 ist veranschaulicht, wie aufgrund eines Dickenwachstums der Batteriezellen 10, also etwa aufgrund der so genannten Zellatmung beim Aufladen und/oder infolge der Alterung der Batteriezellen 10, die Zwischenräume 22 zwischen den benachbarten Batteriezellen 10 schmaler werden. Dennoch halten die Strukturelemente 26 die benachbarten Batteriezellen 10 auf Abstand voneinander und verpressen sie gleichzeitig gegeneinander. Zudem ist durch die größere Kontaktfläche der Strukturelemente 26 mit den Pouchfolien 14 der jeweiligen Batteriezellen 10 eine große Wärmetransportfläche bereitgestellt. Auch in der in Fig. 10 gezeigten Situation dienen die Strukturelemente 26 zudem der Verpressung der Batteriezellen 10.

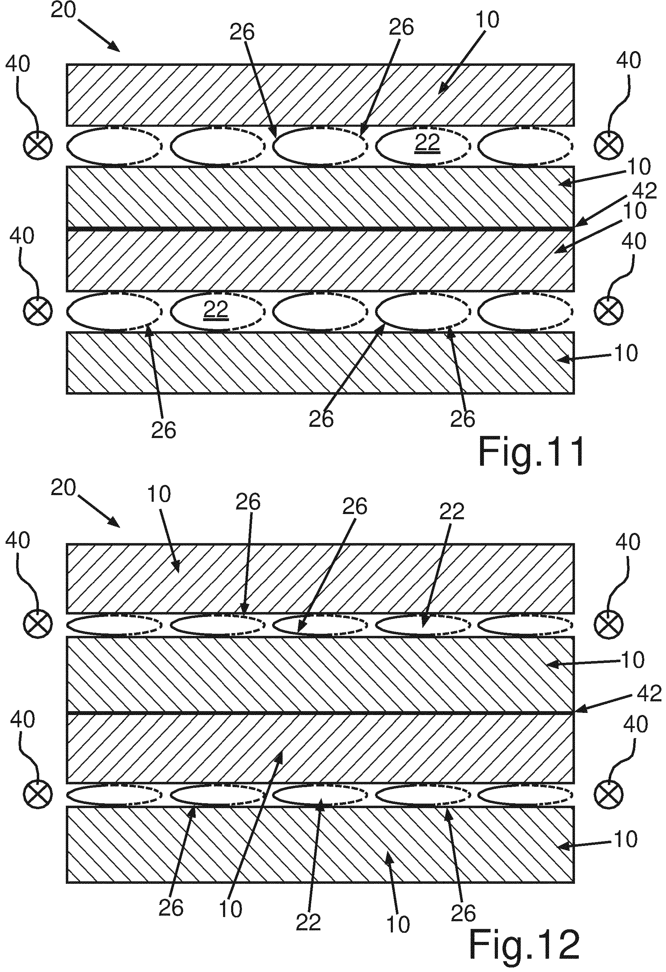

In Fig. 11 ist eine Fig. 9 entsprechende Situation in einer Variante des elektrischen Energiespeichers 20 gezeigt. Hierbei sind jedoch zwei benachbarte Batteriezellen 10 zu einem Zellpaket 42 oder Zellpack zusammengefasst. Dementsprechend liegen diese Batteriezellen 10 mit einer Seite unmittelbar aneinander an. An den gegenüberliegenden Seiten ist jedoch zwischen diesen Batteriezellen 10 des Zellpakets 42 und weiteren benachbarten Batteriezellen 10 der jeweilige Zwischenraum 22 ausgebildet. Auch hier reichen in den jeweiligen Zwischenräumen 22 die Strukturelemente 26 hinein, welche für die Oberflächenerweiterung, die Abstandhaltung und die Verpressung der Batteriezellen 10 in dem elektrischen Energiespeicher 20 sorgen.

Aus Fig. 12 ist ersichtlich, dass auch bei einem derartigen elektrischen Energiespeicher 20 in Folge eines Dickenwachstums der Batteriezellen 10 die Zwischenräume 22 kleiner werden können. Dennoch sorgen die Strukturelemente 26 dafür, dass die Zellpakete 42 auf Abstand voneinander gehalten werden. Des Weiteren ist durch die verformten Strukturelemente 26 vorzugsweise die vergrößerte Wärmetransportfläche bereitgestellt, wie dies vorstehend mit Bezug auf Fig. 7 und Fig. 8 erläutert ist.

Vorzugsweise wird bei der Fertigung der Batteriezellen 10 das Einbringen oder Anbringen der Hülleinrichtung 24 als einer der letzten Schritte direkt während der Herstellung der Batteriezelle 10 vorgenommen. Dementsprechend kann insbesondere eine herkömmliche Schutzfolie, wie sie bei einer als Pouchzelle ausgebildeten Batteriezelle 10 als Schutzhülle verwendet wird, durch die vorliegend beschriebene texturierte beziehungsweise strukturierte Hülleinrichtung 24 beziehungsweise Folie ersetzt werden.

### Bezugszeichenliste

- 10: Batteriezelle
- 12: Aktivbereich
- 14: Pouchfolie
- 16: Ableiter
- 18: Ableiter
- 20: Energiespeicher
- 22: Zwischenraum
- 24: Hülleinrichtung
- 26: Strukturelement
- 28: Eckbereich
- 30: Grundkörper
- 32: Strömungspfeil
- 34: Abschnitt
- 36: Endbereich
- 38: Doppelpfeil
- 40: Symbol
- 42: Zellpaket

## Patentansprüche

1. Batteriezelle für einen elektrischen Energiespeicher (20), mit elektrochemisch aktiven Komponenten, welche jeweilige Elektroden der Batteriezelle (10) umfassen, mit die jeweiligen Elektroden kontaktierenden Ableitern, durch welche elektrische Anschlüsse (16, 18) der Batteriezelle (10) bereitgestellt sind, und mit einer Hülleinrichtung (24), welche zumindest einen Teilbereich einer Außenseite der Batteriezelle (10) bildet,
wobei die Hülleinrichtung (24) eine Vielzahl von Strukturelementen (26) aufweist, durch welche eine Oberfläche der Hülleinrichtung (24) im Vergleich zu einer Hülleinrichtung ohne die Strukturelemente vergrößert ist, wobei die Batteriezelle (10) als Pouchzelle ausgebildet ist, und wobei die Hülleinrichtung (24) eine aus einem elektrisch isolierenden Material gebildete Pouchfolie (14) umfasst,
**dadurch gekennzeichnet, dass**
ein Abschnitt (34) wenigstens eines der Strukturelemente (26) durch die Pouchfolie (14) hindurchtritt, wobei der durch die Pouchfolie (14) hindurchtretende Abschnitt (34) des wenigstens einen Strukturelements (26) wenigstens einen der Ableiter der Batteriezelle (10) elektrisch isolierend thermisch kontaktiert.

2. Batteriezelle nach Anspruch 1,
**dadurch gekennzeichnet, dass**
die Hülleinrichtung (24) einen aus einem flexiblen und/oder elastischen Material, insbesondere ein metallisches Material oder Kunststoffmaterial, gebildeten Grundkörper (30) und die Strukturelemente (26) umfasst, wobei die Strukturelemente (26) bereichsweise über den Grundkörper (30) überstehen.

3. Batteriezelle nach Anspruch 2,
**dadurch gekennzeichnet, dass**
die, insbesondere als Härchen und/oder Flocken und/oder Lamellen ausgebildeten, Strukturelemente (26) aus einem Material gebildet sind, welches eine gleich große oder größere Wärmeleitfähigkeit aufweist als das Material des Grundkörpers (30), insbesondere aus wenigstens einem Metall gebildet sind.

4. Batteriezelle nach einem der Ansprüche 1 bis 3,
**dadurch gekennzeichnet, dass**
ein Abschnitt (34) wenigstens eines der Strukturelemente (26) an der Pouchfolie (14) der Batteriezelle (10) anliegt, welche die elektrochemisch aktiven Komponenten der Batteriezelle (10) umschließt.

5. Batteriezelle nach einem der Ansprüche 1 bis 4,
**dadurch gekennzeichnet, dass**
eine Größe des Abschnitts (34) und/oder eine Länge eines über den Grundkörper (30) überstehenden Endbereichs (36) wenigstens eines der Strukturelemente (26) in Abhängigkeit von einem Volumen eines von der Pouchfolie (14) umschlossenen Bereichs (12) der Batteriezelle (10) veränderbar ist.

6. Batteriezelle nach einem der Ansprüche 1 bis 5,
**dadurch gekennzeichnet, dass**
die Strukturelemente (26) eine elektrisch isolierende Beschichtung aufweisen.

7. Elektrischer Energiespeicher mit einer Mehrzahl von Batteriezellen (10) nach einem der Ansprüche 1 bis 6, wobei zwischen zwei benachbarten Batteriezellen (10) ein von einem Temperierfluid durchströmbarer Zwischenraum (22) ausgebildet ist, in welchen zumindest Bereiche der Strukturelemente (26) hineinragen.

8. Elektrischer Energiespeicher nach Anspruch 7,
**dadurch gekennzeichnet, dass**
wenigstens eines der Strukturelemente (26) einer ersten Batteriezelle (10) von zwei benachbarten Batteriezellen (10) eine zweite Batteriezelle (10) der beiden benachbarten Batteriezellen (10) kontaktiert und/oder die in dem Zwischenraum (22) angeordneten Bereiche der Strukturelemente (26) benachbarter Batteriezellen (10) die benachbarten Batteriezellen (10) bei einer Verringerung einer Größe des Zwischenraums (22) auf Abstand voneinander halten und für eine Verpressung der Batteriezellen dient.

## Claims

1. Battery cell for an electrical energy storage device (20), comprising electrochemically active components which comprise respective electrodes of the battery cell (10), comprising conductors contacting the respective electrodes, through which electrical connections (16, 18) of the battery cell (10) are provided, and comprising a casing device (24) which forms at least a partial region of an outer side of the battery cell (10),
the casing device (24) having a plurality of structural elements (26) by means of which a surface of the casing device (24) is enlarged in comparison with a casing device without the structural elements, the battery cell (10) being designed as a pouch cell, and the casing device (24) comprising a pouch film (14) formed from an electrically insulating material,
**characterized in that**
a portion (34) of at least one of the structural elements (26) passes through the pouch film (14), the portion (34) of the at least one structural element (26) passing through the pouch film (14) thermally contacting at least one of the conductors of the battery cell (10) in an electrically insulating manner.

2. Battery cell according to claim 1,
**characterized in that**
the casing device (24) comprises a main body (30) formed from a flexible and/or elastic material, in particular a metal material or plastics material, and the structural elements (26), the structural elements (26) protruding beyond the main body (30) in some regions.

3. Battery cell according to claim 2,
**characterized in that**
the structural elements (26), in particular designed as tiny hairs and/or flakes and/or lamellae, are made of a material which has a thermal conductivity equal to or greater than that of the material of the main body (30), in particular are made of at least one metal.

4. Battery cell according to any of claims 1 to 3,
**characterized in that**
a portion (34) of at least one of the structural elements (26) rests on the pouch film (14) of the battery cell (10), which encloses the electrochemically active components of the battery cell (10).

5. Battery cell according to any of claims 1 to 4,
**characterized in that**
a size of the portion (34) and/or a length of an end region (36) of at least one of the structural elements (26) protruding beyond the main body (30) can be changed depending on a volume of a region (12) of the battery cell (10) enclosed by the pouch film (14).

6. Battery cell according to any of claims 1 to 5,
**characterized in that**
the structural elements (26) have an electrically insulating coating.

7. Electrical energy storage device with a plurality of battery cells (10) according to any of claims 1 to 6, wherein between two adjacent battery cells (10) a gap (22) is formed through which a temperature control fluid can flow, into which at least regions of the structural elements (26) extend.

8. Electrical energy storage device according to claim 7,
**characterized in that**
at least one of the structural elements (26) of a first battery cell (10) of two adjacent battery cells (10) contacts a second battery cell (10) of the two adjacent battery cells (10) and/or the regions of the structural elements (26) of adjacent battery cells (10) arranged in the gap (22) keep the adjacent battery cells (10) at a distance from one another when a size of the gap (22) is reduced and serves to press the battery cells together.

## Revendications

1. Cellule de batterie pour un accumulateur d'énergie électrique (20), comportant des composants électrochimiquement actifs qui comprennent des électrodes respectives de la cellule de batterie (10), comportant des conducteurs de sortie en contact avec les électrodes respectives, au moyen desquels des bornes électriques (16, 18) de la cellule de batterie (10) sont fournies, et comportant un dispositif formant enveloppe (24) qui forme au moins une zone partielle d'un côté extérieur de la cellule de batterie (10),
dans laquelle le dispositif formant enveloppe (24) présente une pluralité d'éléments de structure (26) au moyen desquels une surface du dispositif formant enveloppe (24) est augmentée par rapport à un dispositif formant enveloppe sans les éléments de structure, dans laquelle la cellule de batterie (10) est conçue comme une cellule poche, et dans laquelle le dispositif formant enveloppe (24) comprend une feuille de poche (14) formée à partir d'un matériau électriquement isolant,
**caractérisée en ce que**
une section (34) d'au moins l'un des éléments de structure (26) passe à travers la feuille de poche (14), dans laquelle la section (34) de l'au moins un élément de structure (26) passant à travers la feuille de poche (14) est en contact thermique électriquement isolant avec au moins l'un des conducteurs de sortie de la cellule de batterie (10).

2. Cellule de batterie selon la revendication 1,
**caractérisée en ce que**
le dispositif formant enveloppe (24) comprend un corps de base (30) formé à partir d'un matériau flexible et/ou élastique, en particulier d'un matériau métallique ou d'un matériau plastique, et les éléments de structure (26), dans laquelle les éléments de structure (26) font saillie dans certaines zones depuis le corps de base (30).

3. Cellule de batterie selon la revendication 2,
**caractérisée en ce que**
les éléments de structure (26), réalisés en particulier sous forme de poils et/ou de flocons et/ou de lamelles, sont formés à partir d'un matériau qui présente une conductivité thermique égale ou supérieure à celle du matériau du corps de base (30), en particulier sont formés à partir d'au moins un métal.

4. Cellule de batterie selon l'une des revendications 1 à 3,
**caractérisée en ce que**
une section (34) d'au moins l'un des éléments de structure (26) s'appuie contre la feuille de poche (14) de la cellule de batterie (10), laquelle feuille de poche entoure les composants électrochimiquement actifs de la cellule de batterie (10).

5. Cellule de batterie selon l'une des revendications 1 à 4,
**caractérisée en ce que**
une taille de la section (34) et/ou une longueur d'une zone d'extrémité (36) faisant saillie depuis le corps de base (30) d'au moins l'un des éléments de structure (26) peuvent être modifiées en fonction d'un volume d'une zone (12) de la cellule de batterie (10) entourée par la feuille de poche (14).

6. Cellule de batterie selon l'une des revendications 1 à 5,
**caractérisée en ce que**
les éléments de structure (26) présentent un revêtement électriquement isolant.

7. Accumulateur d'énergie électrique comportant une pluralité de cellules de batterie (10) selon l'une des revendications 1 à 6, dans lequel un espace intermédiaire (22) pouvant être traversé par un fluide de régulation de température est réalisé entre deux cellules de batterie (10) voisines, dans lequel espace intermédiaire pénètrent au moins des zones des éléments de structure (26).

8. Accumulateur d'énergie électrique selon la revendication 7,
**caractérisé en ce que**
au moins l'un des éléments de structure (26) d'une première cellule de batterie (10) parmi deux cellules de batterie (10) voisines est en contact avec une seconde cellule de batterie (10) parmi les deux cellules de batterie (10) voisines et/ou les zones des éléments de structure (26) de cellules de batterie (10) voisines, lesquelles zones sont disposées dans l'espace intermédiaire (22), maintiennent les cellules de batterie (10) voisines à distance l'une de l'autre lors d'une réduction d'une taille de l'espace intermédiaire (22) et servent à une pression des cellules de batterie l'une contre l'autre.
